# EUROPEAN PATENT APPLICATION

(11) **EP 1 717 074 A1**
(43) Date of publication of application: **02.11.2006**
(21) Application number: 05709728.9
(22) Date of filing: 04.02.2005
(51) Int. Cl.: B60H 1/32

(54) **AIR CONDITIONER**

(30) Priority: 16.02.2004 JP 2004038594
(71) Applicant: Sanden Corporation, Isesaki-shi, Gunma 372-8502 (JP)
(72) Inventor: SUZUKI, Kenichi, c/o Sanden Corporation, shi, Gunma, 3728502 (JP)
(74) Representative: Haley, Stephen
(86) International application number: PCT/JP2005/001662
(87) International publication number: WO 2005/077688

(57) **Abstract**

An air conditioner having in a refrigeration cycle a fixed displacement-type first compression mechanism and a variable displacement-type second compression mechanism independent from each other, and also having second compression mechanism displacement control means, compression mechanism operation switching control means, an evaporator for refrigerant, a condenser, a blower, evaporator temperature detection means, and evaporator target temperature calculation means. The evaporator target temperature calculation means has first compression mechanism evaporator target temperature calculation means for calculating a target temperature for the first compression mechanism and second compression mechanism evaporator target temperature calculation means for calculating a target temperature for the second compression mechanism. When the refrigeration cycle is being operated by both compression mechanisms, the displacement of the second compression mechanism is controlled by the second compression mechanism displacement control means by referring to an evaporator temperature detected by the evaporator temperature detection means and a second compression mechanism evaporator target temperature. The air conditioner can achieve required cooling performance as equal as conventional air conditioners can do, and variations of blown air temperature, room temperature, etc. can be suppressed by controlling cooling performance finely.

## Description

The present invention relates to an air conditioner with a refrigeration cycle having a compressor for refrigerant, and more specifically, to an air conditioner suitable for controlling a refrigeration cycle having a fixed displacement compression mechanism and a variable displacement compression mechanism independent from each other.

In conventional air conditioners, for example, in air conditioners for work vehicles, there is a structure in which a compressor of a refrigeration cycle is operated by an engine to form an air conditioner. Further, in a case where a room space of a work vehicle (for example, a space in a cabin) is large, or in a case where a thermal load varies greatly, there is a case where a plurality of compressors are used for a single refrigeration cycle and drive force transmission systems are provided for respective compressors. Furthermore, there is an air conditioner wherein, in a refrigeration cycle having two compressors, one is a fixed displacement-type compressor and the other is a variable displacement-type compressor (for example, Patent document 1).

In a case where two compressors are used, however, there is a fear that a remarkable change of cooling performance occurs and variations of blown air temperature, room temperature, etc. may occur by switching the operation by both compressors to the operation by a single compressor in accordance with variation of thermal load and the like. Further, when the temperature of an evaporator for refrigerant is controlled, although it is tried to achieve an evaporator temperature target value by controlling the variable displacement-type compressor at a condition of operating the fixed displacement-type compressor and consequently controlling the total discharge displacement of the two compressors, because only one evaporator temperature target value is provided, it is difficult to control the cooling performance finely, and also there is a fear that a change of the cooling performance, and variations of blown air temperature, room temperature, etc. accompanying therewith may occur. Such an undesirable variation of cooling performance may cause a condition of too much cooling ability, and loss of consumption power, etc. may become great. Patent document 1: JP-A-2003-19908

Accordingly, an object of the present invention is to provide a control system capable of achieving required cooling performance as equal as in the conventional systems and capable of suppressing variations of blown air temperature, room temperature, etc. by controlling the cooling performance finely, for an air conditioner having two compression mechanisms wherein one is a fixed displacement-type compression mechanism and the other is a variable displacement-type compression mechanism capable of being changed in displacement.

To achieve the above object, an air conditioner according to the present invention has, in a refrigeration cycle, a fixed displacement-type first compression mechanism and a variable displacement-type second compression mechanism independent from each other, and has second compression mechanism displacement control means for controlling a displacement of the second compression mechanism, compression mechanism operation switching control means for switching to an operation by both compression mechanisms or an operation by any one compression mechanism, an evaporator for refrigerant for cooling air for air conditioning, a condenser for refrigerant, a blower for sending air to the evaporator, evaporator temperature detection means for detecting a temperature of the evaporator or a temperature of air at an exit of the evaporator, and evaporator target temperature calculation means for calculating a target temperature of the evaporator temperature or the evaporator exit air temperature. In the air conditioner, the evaporator target temperature calculation means has first compression mechanism evaporator target temperature calculation means for calculating a target temperature for the first compression mechanism and second compression mechanism evaporator target temperature calculation means for calculating a target temperature for the second compression mechanism, and when the refrigeration cycle is being operated by both compression mechanisms of the first compression mechanism and the second compression mechanism, a displacement of the second compression mechanism is controlled by the second compression mechanism displacement control means by referring to an evaporator temperature or an evaporator exit air temperature detected by the evaporator temperature detection means and a second compression mechanism evaporator target temperature calculated by the second compression mechanism evaporator target temperature calculation means.

In such an air conditioner, it is preferred that, when the refrigeration cycle is being operated by both compression mechanisms of the first compression mechanism and the second compression mechanism, a first compression mechanism evaporator target temperature calculated by the first compression mechanism evaporator target temperature calculation means is controlled at a temperature lower than a first compression mechanism evaporator target temperature at the time of a sole operation of the first compression mechanism, and/or, at a temperature lower than a second compression mechanism evaporator target temperature calculated by the second compression mechanism evaporator target temperature calculation means.

Further, when the displacement of the second compression mechanism becomes minimum, or when the second compression mechanism is stopped, the evaporator target temperature may be used as a target value at the time of a sole operation of the first compression mechanism.

Further, when the refrigeration cycle is being operated by both compression mechanisms of the first compression mechanism and the second compression mechanism and when the displacement of the second compression mechanism becomes a predetermined value A or less, it may be employed that the displacement of the second compression mechanism is controlled minimum, or the second compression mechanism is stopped.

Further, it is preferred that, when the refrigeration cycle is being operated by both compression mechanisms of the first compression mechanism and the second compression mechanism, the second compression mechanism evaporator target temperature calculated by the second compression mechanism evaporator target temperature calculation means is controlled at a first compression mechanism evaporator target temperature calculated by the first compression mechanism evaporator target temperature calculation means or more, and when the evaporator temperature or the evaporator exit air temperature detected by the evaporator temperature detection means becomes lower than a predetermined value B, immediately the displacement of the second compression mechanism is controlled minimum, or the second compression mechanism is stopped.

As the second compression mechanism, a variable displacement compression mechanism controlled by a displacement control signal, or a variable displacement compression mechanism controlled by control of rotational speed may be employed.

In the air conditioner according to the present invention, in the system in that the refrigeration cycle is operated by two compression mechanisms, when the refrigeration cycle is being operated by both compression mechanisms of the first compression mechanism and the second compression mechanism, a required cooling performance may be sufficiently exhibited as well as the cooling ability may be finely adjusted because controlled based on the evaporator target temperature for the variable displacement-type second compression mechanism, and further, in particular, variations of blown air temperature and room temperature ascribed to change of the operation condition of the refrigeration cycle (change at the time of switching between the operation by one compression mechanism and the operation by two compression mechanisms) may be suppressed extremely small. Further, by adjusting the cooling ability finely, it becomes possible to save the consumption power.

**In the drawings:**
[Fig. 1] Fig. 1 is a schematic equipment disposition diagram of an air conditioner according to an embodiment of the present invention.
[Fig. 2] Fig. 2 is a diagram showing an example of calculation of second compression mechanism evaporator exit air temperature target value in the air conditioner depicted in Fig. 1.
[Fig. 3] Fig. 3 is a diagram showing an example of calculation of first compression mechanism evaporator exit air temperature target value in the air conditioner depicted in Fig. 1.
[Fig. 4] Fig. 4 is a time chart showing an example of control of the air conditioner depicted in Fig. 1.
[Fig. 5] Fig. 5 is a time chart showing another example of control of the air conditioner depicted in Fig. 1.

- 1:: air conditioner
- 2:: air duct
- 3:: introduction port for outside air or/and inside air
- 4:: blower
- 5:: evaporator
- 6:: refrigeration cycle
- 7:: main controller
- 8:: drive control signal
- 9:: first compression mechanism
- 10:: discharge displacement signal
- 11:: displacement control signal
- 12:: second compression mechanism
- 13:: condenser
- 14:: liquid receiver
- 15:: expansion valve
- 16:: evaporator exit air temperature sensor
- 17:: vehicle interior temperature sensor
- 18:: outside air temperature sensor
- 19:: sunshine sensor

Hereinafter, desirable embodiments of the present invention will be explained referring to figures.

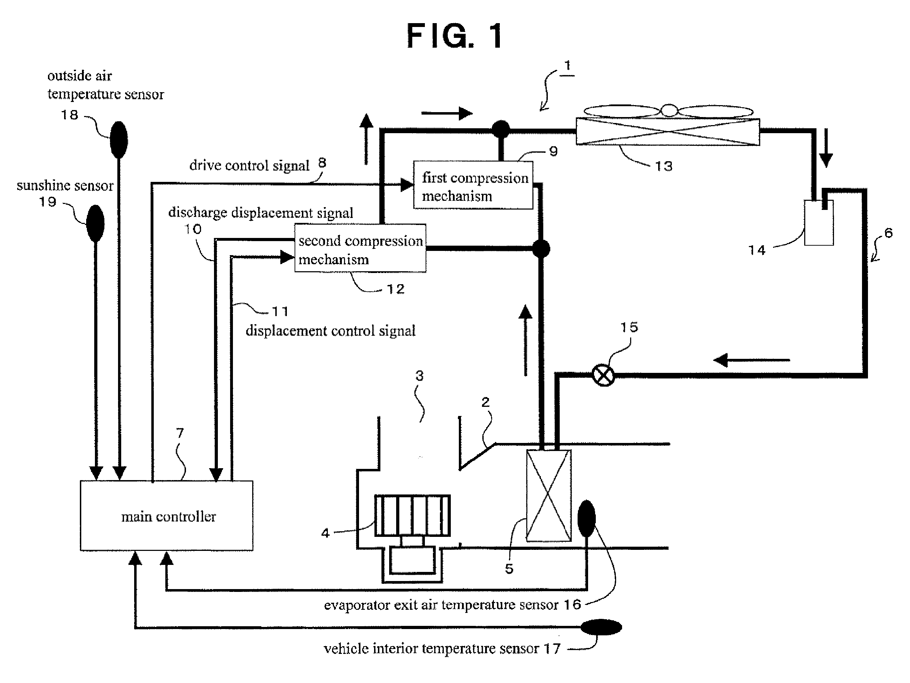

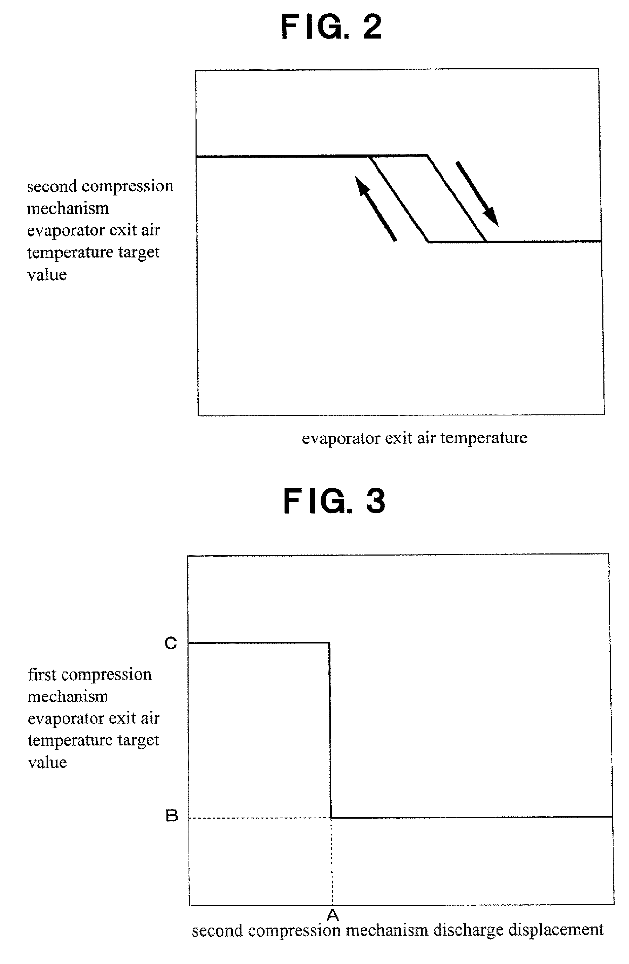

Fig. I shows a schematic equipment disposition diagram of an air conditioner according to an embodiment of the present invention, for example, an air conditioner for work vehicles. In air conditioner 1 depicted in Fig. 1, a blower 4 for sending air sucked through an introduction port 3 for outside air or/and inside air is provided at an upstream position in an air duct 2 opening toward a room interior (for example, the interior of a cabin). An evaporator 5 is provided at a position downstream blower 4 as a cooler for cooling air sent. Although not shown in the figure, as needed, a heater core as a heater may be provided downstream evaporator 5. The air having passed through evaporator 5 and having been cooled is blown into the room interior.

A refrigeration cycle 6 with evaporator 5 is provided in the above-described air conditioner 1. Refrigeration cycle 6 is constructed as a refrigerant circuit in which respective equipment are connected via refrigerant tubes, and in this refrigeration cycle 6, provided are a fixed displacement-type first compression mechanism 9 whose drive source is a prime mover (for example, an engine), etc. and whose drive is controlled by a drive control signal 8 sent from a main controller 7, and a variable displacement-type second compression mechanism 12 whose discharge displacement signal 10 is sent to main controller 7 and whose displacement is controlled by a displacement control signal 11 sent from main controller 7. In this embodiment, second compression mechanism 12 is driven by an electric motor. In refrigeration cycle 6, a condenser 13 for condensing high-temperature and high-pressure refrigerant compressed by first compression mechanism 9 and/or second compression mechanism 12, a liquid receiver 14 for separating the condensed refrigerant into gas and liquid phases, an expansion valve 15 for reducing in pressure and expanding the refrigerant sent from liquid receiver 14, and evaporator 5 for evaporating the refrigerant sent from expansion valve 15 and cooling the air sent in air duct 2 by heat exchange between the refrigerant and the air, are disposed in this order, and the refrigerant from evaporator 5 is sucked into the above-described compression mechanism and compressed again. The temperature control of evaporator 5 is carried out, for example, by the control of a clutch provided on a drive force transmitting route from the prime mover to the first compression mechanism 9 and a control signal for the electric motor for driving the second compression mechanism 12.

In this embodiment, to main controller 7, sent is a signal of an evaporator exit air temperature (Teva) detected by an evaporator exit air temperature sensor 16 provided as evaporator temperature detection means for detecting a temperature of an evaporator or a temperature of air at an exit of the evaporator (Teva). Further, signals from vehicle interior temperature sensor 17, outside air temperature sensor 18 and sunshine sensor 19 are also sent to main controller 7, respectively.

In this embodiment, the control is carried out as shown in Figs. 2 to 5.

When operated by any one of first compression mechanism 9 and second compression mechanism 12, the control of the evaporator temperature is carried out by a target temperature of the evaporator exit air temperature calculated by the evaporator target temperature calculation means. When refrigeration cycle 6 is operated by first compression mechanism 9 and second compression mechanism 12, the evaporator temperature target value control is carried out so as to provide respective independent evaporator temperature target values for the controls of the evaporator temperatures of the first and second compression mechanisms. This control method is shown hereunder.

The second compression mechanism evaporator target temperature at a condition where refrigeration cycle 6 is operated by first compression mechanism 9 and second compression mechanism 12 is calculated, for example, as a second compression mechanism evaporator exit air temperature target value, and for example, as shown in Fig. 2, in a certain temperature region, it is provided as a variable value corresponding to an evaporator exit air temperature detected by evaporator exit air temperature sensor 16. In this variable region, a hysteresis can be given between the temperature elevating and lowering sides, and it is provided as a predetermined constant value in a region except the variable region.

Further, the first compression mechanism evaporator target temperature at a condition where refrigeration cycle 6 is operated by first compression mechanism 9 and second compression mechanism 12 is provided, for example, as a first compression mechanism evaporator exit air temperature target value, and it is controlled referring to the discharge displacement of the second compression mechanism, for example, as shown in Fig. 3. Namely, if the discharge displacement of second compression mechanism 12 is greater than a predetermined value A, the first compression mechanism evaporator exit air temperature target value is controlled at a predetermined temperature B. If the discharge displacement of second compression mechanism 12 is the predetermined value A or less, the first compression mechanism evaporator exit air temperature target value is controlled at a predetermined temperature C. Where, the predetermined temperature C is higher than the predetermined temperature B.

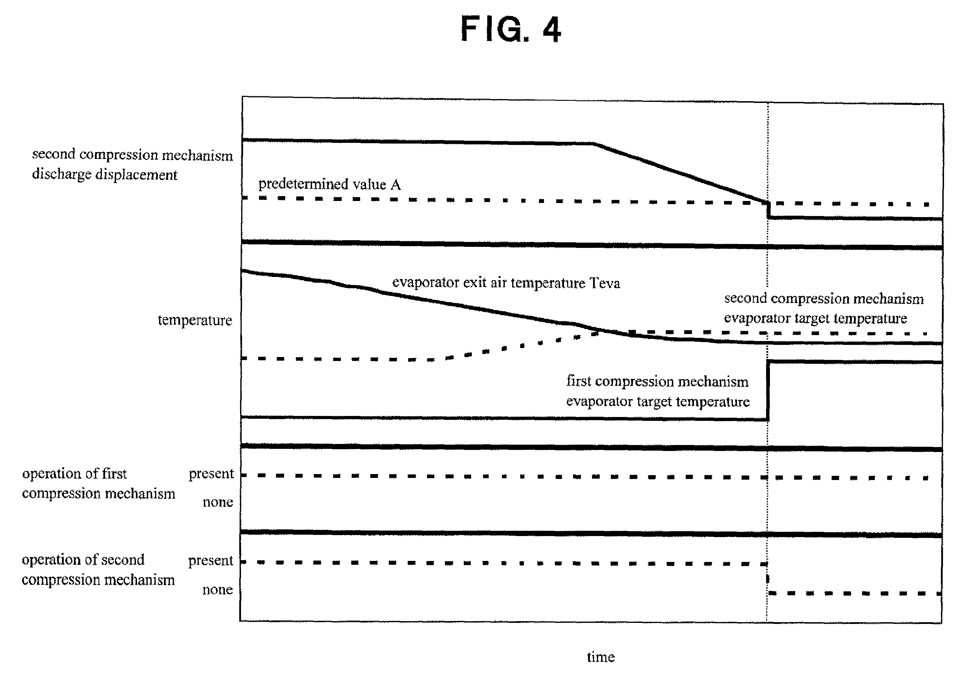

Then, the second compression mechanism evaporator target temperature at a condition where refrigeration cycle 6 is operated by first compression mechanism 9 and second compression mechanism 12 is controlled, for example, as shown in Fig. 4.

In Fig. 4, the second compression mechanism evaporator target temperature is calculated by referring to the evaporator exit air temperature Teva, and referring to the evaporator temperature target value, the discharge displacement of second compression mechanism 12 is controlled. Further, when the discharge displacement of second compression mechanism 12 becomes the predetermined value A or less, the displacement of second compression mechanism 12 is controlled at a minimum value, or it is stopped (in Fig. 4, shown as an embodiment for stopping). Where, the second compression mechanism evaporator target temperature is higher than the first compression mechanism evaporator target temperature C shown in Fig. 3.

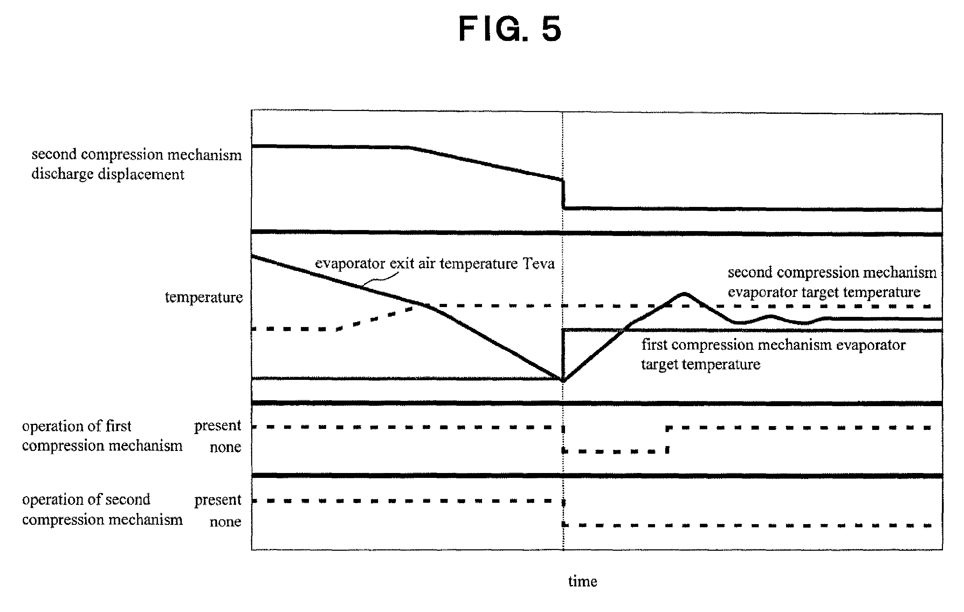

Further, when the evaporator exit air temperature Teva detected by evaporator exit air temperature sensor 16 becomes lower than the predetermined value B (for example, 0°C), as shown in Fig. 5, immediately the discharge displacement of second compression mechanism 12 is controlled at a minimum value, or it is stopped (in Fig. 5, shown as an embodiment for stopping). Further, at that time, as shown in Fig. 5, first compression mechanism 9 may be also stopped, and after a predetermined time passes (namely, at a stage where the temperature is elevated by the stopping), the first compression mechanism 9 may be operated again.

When the refrigeration cycle is operated by the first and second compression mechanisms, the evaporator temperature control is carried out by performing the target value controls of these both compression mechanisms simultaneously.

By the above-described control, when the refrigeration cycle is being operated by the first and second compression mechanisms, a required cooling performance can be exhibited as well as the cooling ability can be adjusted finely, and variations of blown air temperature and room temperature ascribed to change of the operation condition of the refrigeration cycle (change between the operation by one compression mechanism and the operation by two compression mechanisms) can be suppressed. Further, by adjusting the cooling ability finely, it becomes possible to save the consumption power.

The air conditioner according to the present invention can be suitably applied to any refrigeration cycle having a fixed displacement compression mechanism and a variable displacement compression mechanism independent from each other, and in particular, it is suitable as an air conditioner for a cabin of a work vehicle violent in variation of thermal load.

## Claims

1. An air conditioner having in a refrigeration cycle a fixed displacement-type first compression mechanism and a variable displacement-type second compression mechanism independent from each other, and having second compression mechanism displacement control means for controlling a displacement of said second compression mechanism, compression mechanism operation switching control means for switching to an operation by both said compression mechanisms or an operation by any one compression mechanism, an evaporator for refrigerant for cooling air for air conditioning, a condenser for refrigerant, a blower for sending air to said evaporator, evaporator temperature detection means for detecting a temperature of said evaporator or a temperature of air at an exit of said evaporator, and evaporator target temperature calculation means for calculating a target temperature of said evaporator temperature or said evaporator exit air temperature, wherein said evaporator target temperature calculation means has first compression mechanism evaporator target temperature calculation means for calculating a target temperature for said first compression mechanism and second compression mechanism evaporator target temperature calculation means for calculating a target temperature for said second compression mechanism, and when said refrigeration cycle is being operated by both compression mechanisms of said first compression mechanism and said second compression mechanism, a displacement of said second compression mechanism is controlled by said second compression mechanism displacement control means by referring to an evaporator temperature or an evaporator exit air temperature detected by said evaporator temperature detection means and a second compression mechanism evaporator target temperature calculated by said second compression mechanism evaporator target temperature calculation means.

2. The air conditioner according to claim 1, wherein, when said refrigeration cycle is being operated by both compression mechanisms of said first compression mechanism and said second compression mechanism, a first compression mechanism evaporator target temperature calculated by said first compression mechanism evaporator target temperature calculation means is controlled at a temperature lower than a first compression mechanism evaporator target temperature at the time of a sole operation of said first compression mechanism, and/or, at a temperature lower than a second compression mechanism evaporator target temperature calculated by said second compression mechanism evaporator target temperature calculation means.

3. The air conditioner according to claim 1, wherein, when the displacement of said second compression mechanism becomes minimum, or when said second compression mechanism is stopped, said evaporator target temperature is used as a target value at the time of a sole operation of said first compression mechanism.

4. The air conditioner according to claim 1, wherein, when said refrigeration cycle is being operated by both compression mechanisms of said first compression mechanism and said second compression mechanism and when the displacement of said second compression mechanism becomes a predetermined value A or less, the displacement of said second compression mechanism is controlled minimum, or said second compression mechanism is stopped.

5. The air conditioner according to claim 1, wherein, when said refrigeration cycle is being operated by both compression mechanisms of said first compression mechanism and said second compression mechanism, said second compression mechanism evaporator target temperature calculated by said second compression mechanism evaporator target temperature calculation means is controlled at a first compression mechanism evaporator target temperature calculated by said first compression mechanism evaporator target temperature calculation means or more, and when said evaporator temperature or said evaporator exit air temperature detected by said evaporator temperature detection means becomes lower than a predetermined value B, immediately the displacement of said second compression mechanism is controlled minimum, or said second compression mechanism is stopped.

6. The air conditioner according to claim 1, wherein said second compression mechanism comprises a variable displacement compression mechanism controlled by a displacement control signal, or a variable displacement compression mechanism controlled by control of rotational speed.
